# EUROPEAN PATENT SPECIFICATION

(11) **EP 2 658 733 B1**
(45) Date of publication and mention of the grant of the patent: **17.05.2017**
(21) Application number: 10846404.1
(22) Date of filing: 28.12.2010
(51) Int. Cl.: B60C 17/06, B60C 19/12, B60C 17/00, B60C 7/12, B60C 7/10

(54) **SEMI-PNEUMATIC TIRE (INTIRE)**
SEMIPNEUMATISCHER REIFEN (INTIRE)
PNEU SEMI-PNEUMATIQUE (PNEU "INTIRE")

(43) Date of publication of application: 06.11.2013
(73) Proprietor: Alshdaifat, Wasfi, Abu Dhabi (AE); Almuhairbi, Eida, Abu Dhabi (AE)
(72) Inventor: Alshdaifat, Wasfi, Abu Dhabi (AE); Almuhairbi, Eida, Abu Dhabi (AE)
(74) Representative: Viering, Jentschura & Partner mbB Patent- und Rechtsanwälte
(86) International application number: PCT/IB2010/003364
(87) International publication number: WO 2011/104579

(56) References cited:
- WO-A1-96/05917
- WO-A2-2011/104578
- US-A- 3 100 518
- US-A- 6 105 641
- US-A1- 2006 249 236

## Description

### Technical Field of Invention

This invention relates to a tire that can gather inside it (intire) between a non-pneumatic 1^{st} portion supporting the run-flat conditions, and a pneumatic portion that supports easy removal and installation of a tire having a main non-pneumatic portion.

### Background Art

When a conventional tire is mounted on a wheel and inflated, its bead presses against the edge of the rim, providing an airtight seal securing the tire to the wheel. Tubed tires would leak the air directly when getting punctured, and the vehicle will be hard to drive or steer, the (tubeless) type will get the air leaked gradually, and so the vehicle will get gradually undriveable and hard to steer. Examples of tubed or tubeless tires are disclosed in G. C. Arey; F. O. Church; S. Khalil; D. M. Coddington et al.; and J. Kosanke, in U.S. Pat Nos. 2,334,893; 2,554,815; 2,680,463; 3,724,521; and 3,945,419 respectively.

The problem in these constructions is that as the air leaks more, the safety decreases, and the probability of accident increases, in addition to getting the wheel rim damaged at higher air leakages. As a solution, Tires and automobiles manufacturers put the ideas for designing run-flat tires, which solved the upper problems and increased cargo space but indeed created another problems. Run-flat tires are filled with air, but when punctured they depend on other means to support the vehicle. There are basically two types of run-flat tires:
1- Self-supporting run-flats. Most run-flat tires have reinforced sidewalls that support the weight of the vehicle when the tire deflates. Examples are disclosed in patents No.s: US 7,448,422 and US 6,422,279 B1.
2- Run-flat tires with support rings. Here a support ring encircles the interior of the wheel and prevents the tire from collapsing on the wheel when it loses air. But such tires are expected to be potentially more expensive, and may require special mounting equipment. Examples of patented designs are disclosed in Patents No.s: US 4,773,461; US 4,324,279; US 4,293,017; 4,216,809, International Publication No.: WO 2010/037052 A1.

Typically, run-flat tires limitedly can be driven with no air pressure for 50-125 miles at 50-55 mph. But those of the self-supporting type suffer from steering slight pulling and vibration at normal driving speeds, because they depend on sidewall's stiffness to support a vehicle when a tire goes flat, they typically provide a harsher, noisier ride and poor handling than conventional tires. While those with support rings, suffer from a relative collapse of the tire carcass towards the support ring, due to the installation procedure of the ring insert which requires an unavoidable space that need to be left in-between the support ring and the inner surface of the tire crown inner side when the tire is fully flat, this causes at puncture cases a harsher / noisier ride. Solutions were put to install a ring covering all the tire cavity, but that would not work without extra laborious and materials and parts segments complications.

Other solutions were offered by easily inserting a multi-tube inside the tire cavity, but without contacting the tire's surface, then blowing the tubes, but this unrepairable type will lead to the failure of all tubes successively when the tire collapse towards the tubes having inside its crown a vertical sharp metal.

For all of these types, when they get punctured, they will be driven on a substantially less air than their normal-rated-free inflation pressure, as a result, the components of such tires, such as the sidewalls and carcass, are subjected to extreme deformations, stress and wear, and expected to get un-repairable, or expected to be punctured once again after repaired.

Tire manufacturers and inventors left out the box of these pneumatic run-flat designs towards non-pneumatic designs, the direction separated into two:
1- Airless tires: wherein different shapes of geometrical holes (openings) are made from one side wall towards the other one, these holes are either penetrating the whole solid tire's width, or part of it from one side, or part of it from the inner side. Such designs are found in patents No.s: US 6,681,822 B2, US 4,226,273, US 4,549,592, US 4,832,098, US 7,143,797 B2, EP 0 802 865 B1, EP 1 687 155 B1, and EP 1 486 356 A1. And International publications No.s: WO 2009/016962 A1 and WO 89/05736.

As these designs required solid rigid tires, and as the holes bored in it are not having flexible metallic or any other reinforcing linings, its rigidity which is in a whole contact with the whole wheel rim surface will create not only vibrations, but as they are not simulating the air compression performance inside the pneumatic tires, such little cushion, will lead to limited speeds with rough ride, stiff, harsh, uncomfortable driving in total damaging the suspension. Also since these designs are airless, they could not fix the tire to the wheel rim through the air seal that is tightening the tire's bead to the rim as in pneumatic tires, but they are bonded (adhesively joint) to the wheel rim, which means unavoidable prohibited removal and installation using conventional workshops tools.
2- Non-Pneumatic wheels with flexible spokes supports made of polyurethane: Here no sidewalls are used, a solid inner hub or rim mounted onto the vehicle axle is supported through a web of multi- shaped elements or spokes... to the shear band which on it sets the (tread, carcass), these spokes are flexible to simulate the air performance in pneumatic tires, such designs are found in both Michelin's tweel (US Application No: 2006/0113016) and Resilient Technologies (US Patent Application Publication: US 2008/0314486 A1) or others: e.g: International Publication Numbers: WO2008/050503 A1, WO 2008/136099 A1. Further, US 2006/0249236 A1 also discloses a non-pneumatic tire for a vehicle featuring a body of elastic material and having a circumferentially-extending crown portion featuring a running surface and circumferentially extending sidewalls joined to the crown portion.

But these designs are having many problems, such as: Considerable noise and vibrations above 50 mph, heat generation, lack of adjustability (unreplaceable), bonded to the wheel rim which means it is unreplaceable and unrepairable, continuous deformation of the loaded tread and shear band outer edges while turning and hence wear results, curbs may press the spokes until reaching the inner hub and damaging it, vehicle tilting while turning and at take off due to the compression and expansion of the spokes, ugly gaps due to the spokes which will collect dirt, mud, sand, stones breaking the wheel balance radial and lateral flexibility, no larger rim sizes, not economic, and so it may be not approved by automobile manufactures, law, insurance.

In total a simple gathering tire between pneumatic and non-pneumatic portions, with reinforcements, pad supports, holes or geometrical openings in the solid matter, with semi-ring support all gathered inside a simple design of one tire -called (intire)- is an all in one promising solution, which is the subject invention.

### Disclosure of Invention

### Brief Description

As it is not easy for one design from either run-flat tires pneumatic or non-pneumatic to achieve all the required conventional inflated tire performance, removal and installation, repairable, not creating new problems; a solution can only be based on a gathering uncomplicated design in-between the main features of the pneumatic and non-pneumatic run-flat tires.

As the air leakage is the mother of all problems, and as it is mostly leaked through the tire crown due to penetrations there, a solution should be to make the surrounding inner space non-pneumatic, at the same time supporting this space with a non-collapsable annular portion of solid elastomer as part of the tire with a reinforced elongated geometrical opening embedded in-between the solid tire's side walls inner sides.

As non-pneumatic tires have no beads, and as the conventional tire's bead is setting and fitting to the wheel rim via tire's air pressure, and as the bead is allowing removal and installation of the tire only if there are beads and air to be released, the inner annular portion of the tire should be pneumatic to a height creating the required beads. In this regard, the invention provides a semi-pneumatic tire according to claim 1. Further embodiments are shown in the dependent claims.

### Brief Description of Drawings:

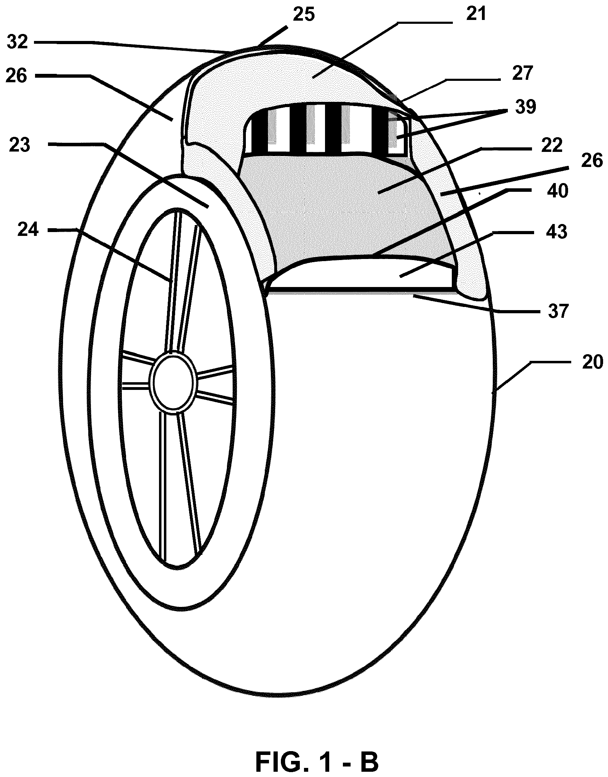

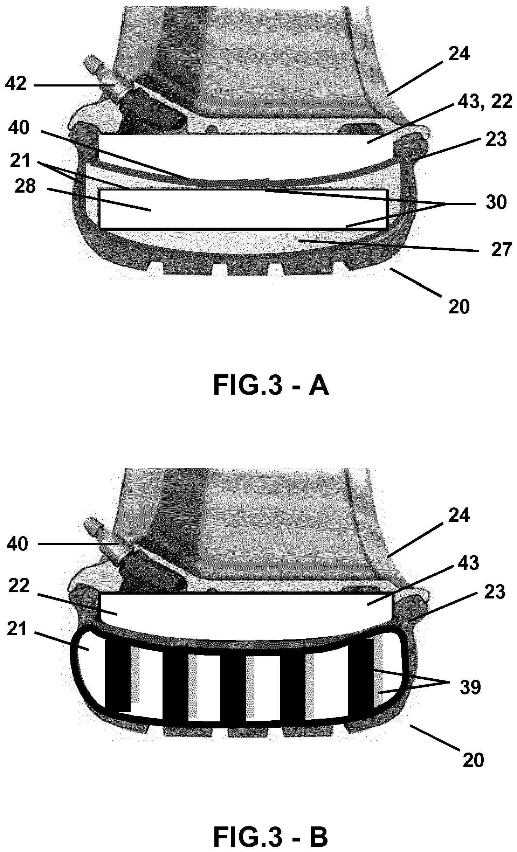

Figs. 1-B and 3-B do not form embodiments of the present invention as such, but help explaining aspects of the present invention.
FIGs. 1-A, 1-B, 1-C illustrate three dimensional views of three embodiments for the inner parts of a semi-pneumatic tire (intire).
FIGs. 2-A, 2-B, 2-C illustrate two-dimensional tire's side cross-sections of the geometrical views of three embodiments for the inner parts of a semi-pneumatic tire (intire).
FIGs. 3-A, 3-B, 3-C illustrate two-dimensional tire's front cross-section views of the inner parts of a semi-pneumatic tire (intire).
FIGs. 4-A and 4-B illustrates a two dimensional view of the semi-pneumatic tire (intire) puncture handling case compared to another conventional tire with reinforced side wall or support ring types.

### Best Mode for Carrying Out the Invention

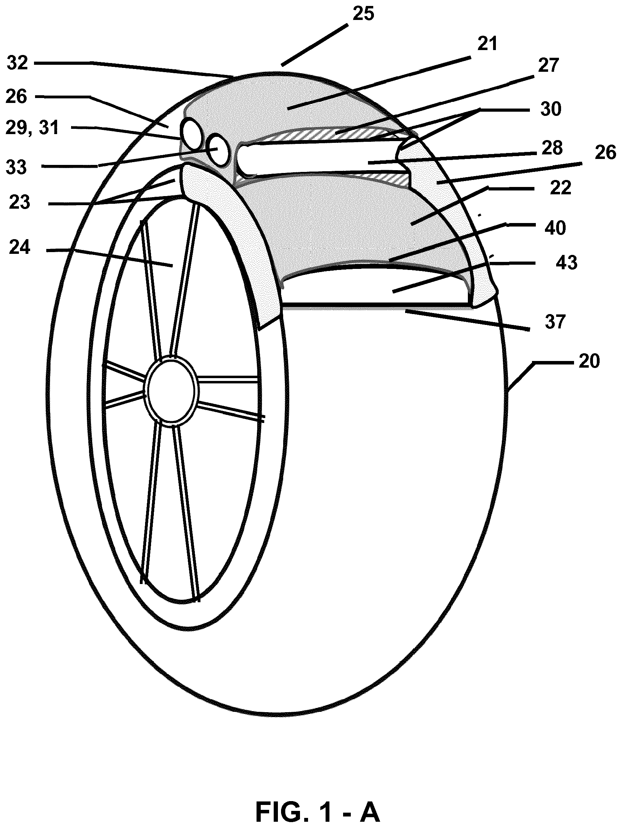

In order to make it easy to carry out the invention, a detailed description of the parts of the invention supported with figures is provided here, where the figures of the main parts are arranged sequentially. Each part has many features, we made it easy to read, by referring to each feature with a number included in the parts description text and in the parts numbering list, wherein the numbering of parts features is indicated here by starting it sequentially from number 20. Whenever a part feature appears in the text, it will be directly assigned its required serial number. As example in FIG. 1-A, the parts features are arranged sequentially from number 20 to 21, 22, 23...

While all the major accepted and used designs in the prior inventions for run-flat tires surrendered to the fact that these designs are limited by the speed, distance, type of repair, and poor handling issues, which will lead to loading the vehicle in a semi-curled (half flat) tire; the design of the semi-pneumatic tire (intire) (20) here is done to overcome all the problems of prior art, the design here is so-called intire (20) because it is a gathering design of multi-designs requirements inside it, so mainly the entire main features of the other designs are recreated and developed inside a conventional tire, it is not by chance that the name (intire) reads the same as the word entire, which gives the same meaning. As a gathering modified tire (20) need to be non-pneumatic from the portion exposed to air leaks, punctures, while from another side to be made easy for removal and installation using the same conventional procedures and tools; and as such a tire (20) main lower non-pneumatic portion (21) capability and requirement need to be used for 2-4 years driving as conventional tires, where this only can be achieved by a non-collapsable portion (21) in cases of penetrations, this portion (21) should be fully supported, but as either a solid rubber or polyurethane is lightweight and can provide that support, while smaller sizes of metallic pads further can achieve these requirements, but as these both procedures will create either flexible collapsible or rigid non-collapsable portion, a geometrical design with internal geometrical designs inside this portion (21) gathering between the rubber, polyurethane, metallic supports can be a promising design providing non-collapsable portion but keeping its flexibility in a manner simulating the air performance in conventional tires. Furthermore, the semi-pneumatic tire (intire) (20) needs to have a secondary pneumatic portion (22) to support the beads (23) setting and fixing against the wheel rim (24) when it is blown. In total such a design major requirements of success require secondary geometrical designs and touches to provide a tire running for longer distances even when penetrated at higher speeds, with comfortable handling, ride, steering, and eliminated noises or vibrations. This general figure will be more clear through the following detailed description of the figures.

### Parts drawings description:

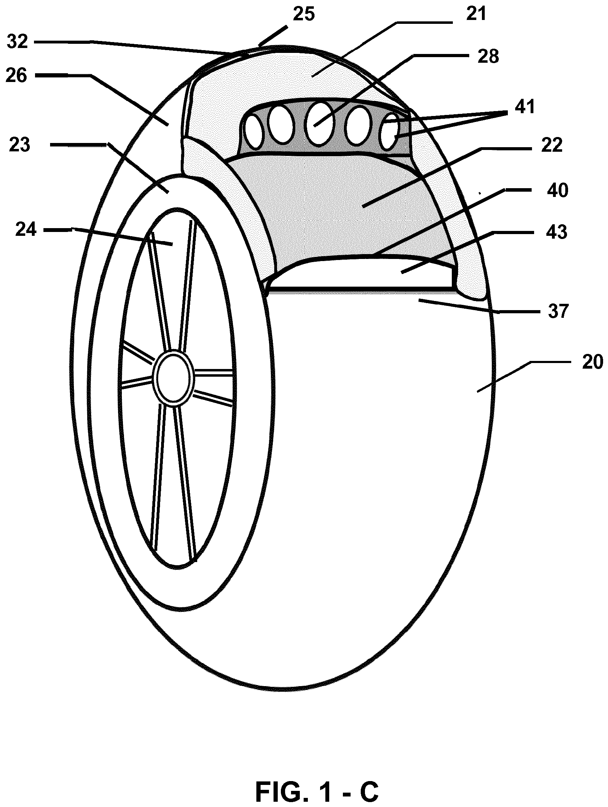

1- FIGs. 1-A, 1-B, 1-C illustrate three dimensional views of three embodiments for the inner parts of a semi-pneumatic tire (intire) (20), wherein a cut is made in a conventional tire (20) showing the arrangement of the main non-pneumatic support portion (21) which is extending annularly along the intire's (20) crown (25) inner side, and inwards radially to a height of 50-80 % of the intire's (20) height, the percentage increases from 50 % towards 80 % as the intire's (20) height increases, to keep a suitable space for the secondary pneumatic chamber (22) to have a height providing the minimum suitable height for the intire's (20) bead (23) to help in the removal and installation of the intire (20). Availability of the non-pneumatic portion (21) and the pneumatic portion (22) gave the intire (20) the name semi-pneumatic tire (20).
   The main non-pneumatic support portion (21), to be non-pneumatic, is designed by imagining first that we have a conventional tire with a secondary hollow portion (22) (wheel rim (24) side), and a primary annular solid portion, wherein the primary annular solid portion as one piece consists of a conventional tire's crown (25) made of rubber and radial metallic strengthening belts, sidewalls (26) of rubber enclosing annular solid part of polyurethane (27), wherein the solid polyurethane part which is in direct contact with the tire's crown (25) and side wall (26) as one piece is not kept solid, but it has openings (holes, chambers) (28) inside it extending in-between the inner sides of the sidewalls (26) of the intire (20), so that the material weight is lowered and saved, wherein these hollow enclosed openings or holes are creating chambers (28) inside the solid portion (27), but these chambers (28) even they are compressible and flexible due to their polyurethane material, their flexibility and compressibility should be limited to a degree that they can simulate the performance of air in pneumatic tires, else these chambers (28) will collapse under load, a strong hump will compress it badly, likewise while turning, braking, take off. While if they are kept more rigid to absorb these compressions, their rigidity will be reflected from the other side on the normal driveability, making it more harsh from all aspects, wherein the solutions should balance in-between all of these issues. This target can be achieved by reinforcing the chambers (28) sidewalls (29) surfaces with a semi-flexible light metallic lining (30) in the shape of one embedded piece having the inner geometrical shape of the chamber (28). So the solid portion material (27) can be in general made of an elastomeric material, which is a resilient material capable of recovering size and shape after deformations.
   One example of materials that can be used as a recommended light metallic lining (30) with around 3-5 mm thickness is the Magnesium strong resin powder blend in the plastic material, which has proven properties that can change the physical properties of products to increase tensile strength, impact strength, shear strength, interference bending strength, hardness, lower distortion, upheld the rate of thermal expansion coefficient. Magnesium strong powder mixed with the rubber material, rolling or extrusion 8m/m-10m/m thickness of the thin, there is smooth and very good surface, and can quickly reduce air bubbles. Other reinforcing materials can be of glass fibers.
   The geometrical shapes of the chambers (28) should be sized, oriented and comprised of such mentioned materials that facilitate buckling when subjected to compressive load. As the division of the solid portion into hollow chambers (28), the sidewalls (29) of these chambers (28) will act as a web of elements (31) like that found in non-pneumatic tires, these chambers (28) side walls (29) - (31) or web elements (31) by buckling in a deformed portion of the intire (20) in-between the intire's carcass (32) and the inner secondary pneumatic annular portion (22) may assume a significantly reduced portion of the load. This will cause the chambers sidewalls (29, 31) or web of elements (31) in the other portions of this interconnected web (31) to operate in tension, supporting the load. Since the intire's (20) lower main portion (21) is non-pneumatic; the possibility of blowouts will be eliminated, so the intire (20) may have a longer life than either run-flat tires or conventional tires. In contrast, the unloaded portion of the intire (20), the interconnected web (31) will dampen noises and vibrations creating more comfortable ride with improved handling capabilities.
   These geometrical shape designs of chambers (28) which are either oval (33), enclosed in-between elongated crossing waves (34), elongated curved rectangles (35), or elongated hexagons (36) are suggested and selected for this design to achieve the followings:
   a- A geometrical design of elongated curved shape that goes in parallel with the curvature of the intire (20) annular curvature, to achieve an optimum load distribution and smooth rolling of the intire (20), which will be reflected on the whole wheel improved performance at punctures cases.
   b- The chambers (28) are made inside an annular ring of solid polyurethane inside the intire's (20) cavity (37), the chambers (28) are having reinforced embedded linings (30) to achieve reinforcing the intire's radial stand even having non-pneumatic chambers (28), these linings (30) also can provide an added stiffness as well as preserving some flexibility for the intire (20), while at the same time its semi-flexibility will let its performance simulate the conventional pneumatic tire properties, also the chambers (28) will achieve savings in the material, and saving an empty space inside the intire (20), to achieve a flexible calculated compression and expansion of the intire (20) along its radial height.
   c- To achieve a three dimensional symmetry of the material and load distribution along the intire (20).
   d- In another embodiment to provide a smooth curved space without sharp edges inside the chambers (28) for an easy installation of reinforced semi- compressible rubber or metal curved reinforcements to support the intire (20) tension and compression, in another way to support its rigidity and flexibility at the same time, which will help in handling and resembling the conventional tire performance and tasks,
   e- To provide a wide expanded area, where the load distribution of the vehicle through the tire's main non-pneumatic portion (21) will translate to a minimized pressure,
   f- Small minor holes (chambers) (38) of a selected suitable geometrical shapes can also be done through the solid polyurethane (27) remaining solid matter to provide a further means of achieving the prior mentioned points, but in a limited range.

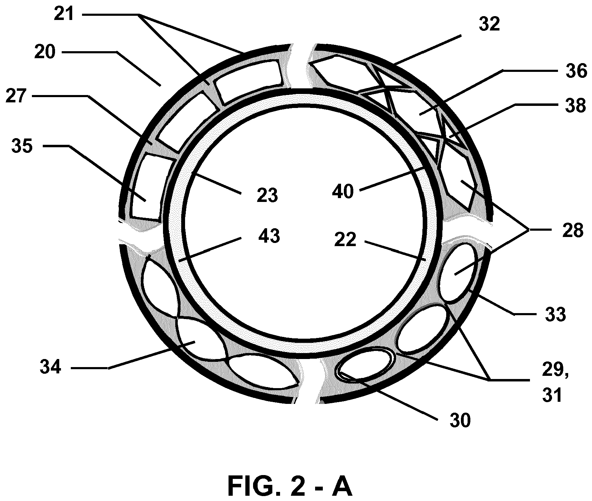

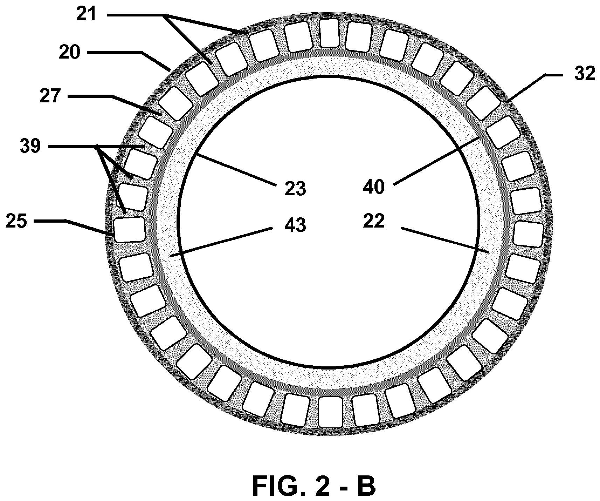

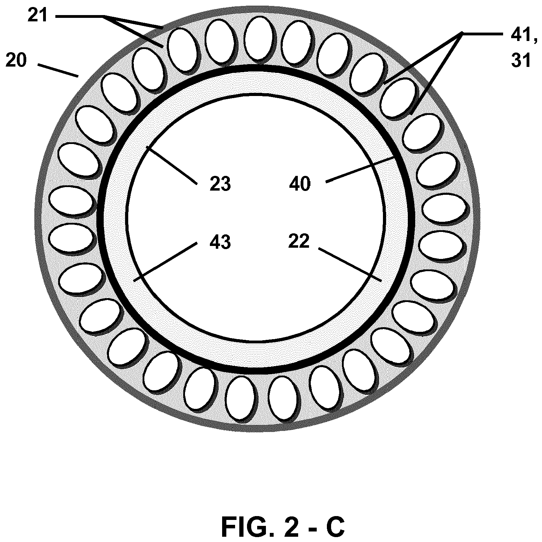

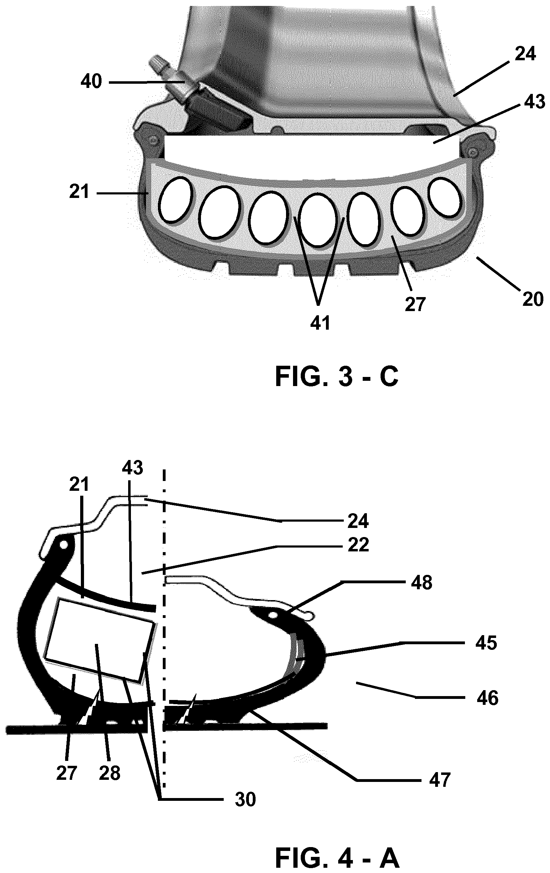

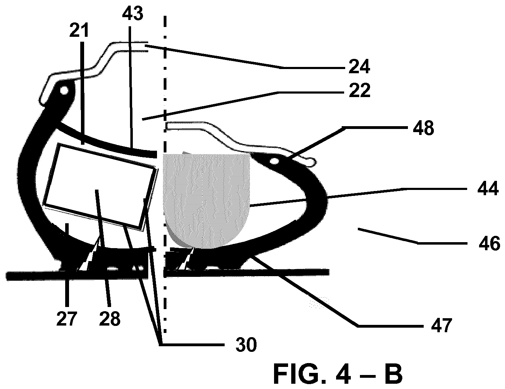

   In total, by including interconnected web (31) of polyurethane and reinforced suitable geometrical shapes of linings (30) in the main lower non-pneumatic portion (21) and having a secondary pneumatic upper portion (22), these components would provide an intire (20) with traction control and handling characteristics for different kinds of tire applications such as racing, winter driving conditions, mud and off-road use, rainy or wet road driving, on humps, pothole or similar obstacle, that further would improve the fuel efficiency, safety and ride comfort, and due to the small secondary pneumatic portion (22), it may save the need for the expensive air pressure sensors, and their control unit, wiring, and all related labor costs for manufacturing and maintaining it.
2- FIGs. 2-A, 2-B, 2-C illustrate two-dimensional tire's side cross-sections of the geometrical views of three embodiments for the inner parts of a semi-pneumatic tire (intire (20)), with chambers (28) in Fig. 2-A made along the width of the main annular non-pneumatic portion (21), and wherein in Fig. 2-B separate single reinforced support pads (39) or columns made of reinforced polyurethane are made with cylindrical shape in-between the intire's (20) carcass (32) inner side and the secondary portion carcass (40), while in Fig. 2-C separate reinforced single semi-cylindrical support pads (41) with a middle diameter smaller than that at the edges are made in-between the intire's (20) carcass (32) inner side and the secondary portion (22) carcass (40). In Fig. 2-A the cross section is divided into four, wherein each one is resembling part of a complete geometrical design of a suggested intire (20) to be selected separately for use, the geometrical designs of chambers (28) being either oval (33), enclosed in- between elongated crossing waves (34), elongated curved rectangles (35), or elongated hexagons (36).
3- FIGs. 3-A, 3-B, 3-C illustrate two-dimensional intire's (20) front side cross-section views with its inner parts inside the whole tire's cavity (37). The tire's main non-pneumatic portion (21) even having an interconnected web of elements (31) with reinforced chambers (28) as in Fig. 3-A or having a semirigid (semi-flexible) support pads (39, 41) as in Figs. 3-B, 2-C, the base and top of the interconnected web of elements (31) or single support pads (39, 41) which appear in an array, or the carcass (40) of the secondary pneumatic portion (22), are made not by assembly of parts, but are resulting after injecting the required liquid state materials in the moulds (including the pads reinforcements, or reinforced linings) inside a conventional tire's cavity (37), wherein all of these materials should be in direct contact with its mating side as if it is one piece, so that finally all are inside the tire (intire (20)) or the entire of the tire is one piece.
   Figs. 3-A to 3-C furthermore show the air valve (42) penetrating in one way to inside the cavity (43) of the secondary pneumatic portion (22) which will be only filled with air.
   The reinforced single support pads (41) in Figs. 1-C, 2-C and 3-C are made by designing a mould with oval spaces, that are made to create oval spaces in-between the support pads (41).
   The inner material of the support pads (39, 41), should not be solid from polyurethane, it should have a metallic support embedded inside it with a flat wide ends and relatively thin from the middle, this metallic reinforcement can be made from the blend of the linings (30) reinforcement mentioned and suggested in this invention.
4- FIGs. 4-A, 4-B illustrate two dimensional views of the semi-pneumatic tire (intire (20)) puncture handling case compared to another conventional tire with reinforced side wall (Fig. 4-A), or support ring (Fig. 4-B) types.
   Here it is clear that as the air of the tire is leaked, for the three types, the intire (20) crown (25) will not collapse to inside, since it is directly supported by the embedded inner sidewalls (29) (web of elements (31) and the reinforcing linings (30) of the hollow chambers (28) or in another embodiment the reinforced single support pads (39, 41), wherein all of these are supported further to the inner pneumatic portion (22) and the intire (20) outer sidewalls (26). These two cases as shown in FIGs. 4-A, 4-B will not be handled by the conventional support ring (44) designs and other side wall reinforcement (45) designs, wherein in these designs a collapse of the tire (46) crown (47) will be noticeable, the tire (46) height will decrease to more than 1/2 of it, making the tire (46) a semi-run-flat tire not a run-flat tire as it is repeatedly called, wherein such a case will loosen the beads (48) fitness from the wheel rim (24) and this will lead to slippage of the tire (46), deformation, curling..., wherein all of these will lead to a limitation on the driving speed and distance with poor driveability, and finally a damaged tire (46), being the result which is mostly avoided in when the design suggested in this invention is used in handling the same case, so it is clear that the design in this invention will not let the intire's (20) carcass (32) collapse to even part of the height which the other conventional designs fail to it directly, wherein this will provide the opportunity for driving at all types of speeds for longer distances with a comfortable driving. Hence the age of the intire (20) will be increased, the chances for repairing it become higher, the driveability is improved, and the vibrations are decreased, which lead to more safety, while the wheel rim (24) is perfectly protected from dents that result from a sudden partial collapse as in other run-flat tires (46), or a semi-run-flat tire hitting road humps or going in potholes as in the case with conventional support rings (44).

Furthermore, it needs to be noted that this invention offers a full time design that can handle multi-punctures at the same time, with different bore sizes or depths, while the prior mentioned designs, or even the multi-tube designs, multi-air balls designs, tire's crown lubricants and sealants, cannot offer such benefits and advantages.

### Method of installation and removal:

As the removal and installation of conventional tires depend on releasing the air out of the tire and on the availability of beads (23) with a suitable height, and as the semi-pneumatic tire (intire) (20) has these requirements available, so its removal and installation is completely the same like that for conventional tires.Furthermore, its repair is the same, either for the main portion (21) carcass (32) or the secondary pneumatic portion (22) carcass (40) which can be repaired from inside the secondary portion (22) cavity (43).

### Industrial Applicability

In addition to all mentioned reasons before about the important needs for a semi-pneumatic tire (intire (20)) and the modes for carrying it out, the subject invention has the following benefits:
1- Easily produced using simply designed manufactured molds wherein the elastic rubber, polyurethane... are injected in the molds to form a compact (all in one) tire with built-in pneumatic portion, non-pneumatic portion, reinforced linings, reinforced web of elements or support pads, and secondary annular ring support (carcass).
2- Easy usage: using simple built-in parts, it minimizes the time for removing and installing or repairing them as they are one piece (intire).
3- Workable: using the right places for installing them.
4- Lightweight, safe, and attractive design.
5- Improves run-flat tire comfortable drivability with many punctures or cracks, which improves handling, safety, speed, distance, and keeps it repairable after many punctures.
6- As it keeps the height of the tire nearly the same from the road surface, unlike other conventional run-flat tire designs, this will keep the rim far away from being exposed to deformation as the tire passes a hump or runs in a road hole.
7- This design did not require any modifications on the prior wheel rims or tires, it is simulating the conventional tire performance full time drive.

### Parts Drawings Index:

### Parts Drawings Index:

- 20: Semi-pneumatic tire (Intire).
- 21: Main non-pneumatic annular portion.
- 22: Secondary pneumatic annular portion.
- 23: Bead.
- 24: Wheel rim.
- 25: Crown.
- 26: Sidewall.
- 27: Solid polyurethane.
- 28: Chamber.
- 29: Chamber's side wall.
- 30: Metallic lining.
- 31: Web of elements (Chamber's side walls).
- 32: Intire's carcass.
- 33: Oval hole.
- 34: Hole enclosed in-between elongated crossing waves.
- 35: Elongated curved rectangular holes.
- 36: Elongated hexagonal holes.
- 37: Intire Cavity.
- 38: Small chambers.
- 39: Reinforced single separate reinforced support pads array.
- 40: Secondary pneumatic portion carcass.
- 41: Reinforced semi-cylindrical single separate support pads.
- 42: Air valve.
- 43: Secondary pneumatic portion cavity.
- 44: Support ring.
- 45: Reinforced side walls.
- 46: Tire.
- 47: Crown (carcass).
- 48: Bead.

## Claims

1. A semi-pneumatic tire (20) comprising:
a main outer non-pneumatic annular portion (21);
a secondary inner annular pneumatic portion (22);
chambers (28) extending along the width of the main portion (21) and having cross sectional shapes of elongated geometrical shapes; and
reinforcement linings (30) embedded inside the chambers (28).

2. The semi-pneumatic tire (20) of claim 1, wherein the main outer non-pneumatic annular portion (21) is enclosed between crown (25) of the semi-pneumatic tire (20) and the secondary inner annular pneumatic portion (22) with a height of the main outer non-pneumatic annular portion (21) equaling a percentage of 50-80 % of the height of the semi-pneumatic tire (20).

3. The semi-pneumatic tire (20) of claim 1, wherein the secondary inner annular pneumatic portion (22) is created as a pneumatic chamber appearing naturally in a cavity (37) of the semi-pneumatic tire (20) from the space left inside the cavity (37) after the main portion (21) is created and occupying its suitable space.

4. The semi-pneumatic tire (20) of claim 3, wherein the secondary inner annular pneumatic portion (22) is enclosed in-between side walls (26) of the semi-pneumatic tire (20) and the inner side of the main outer non-pneumatic annular portion (21) which is a carcass (40) for the secondary inner annular pneumatic portion (22), wherein this carcass (40) is further reinforced.

5. The semi-pneumatic tire (20) of claim 1, wherein surfaces of sidewalls (29) of the chambers (28) are reinforced with a semi-flexible light metallic lining (30) with around 3- 5 mm thickness.

6. The semi-pneumatic tire (20) of claim 1, wherein chambers (28) of the main outer non-pneumatic annular portion (21) are extending between the inner sides of sidewalls (26) of the semi-pneumatic tire (20) and have a geometrical cross sectional shape of either ovals (33), or enclosed in-between elongated crossing waves (34), or elongated curved rectangulars (35), or elongated hexagons (36).

7. The semi-pneumatic tire (20) of claim 6, wherein the geometrical cross section of the chambers (28) is elongated and curved in parallel with the wheel rim (24) and circular curvatures of the semi-pneumatic tire (20).

8. The semi-pneumatic tire (20) of claim 1, wherein the chambers (28) are reinforced by semi-compressible metallic linings (30), to simulate the flexibility, elasticity and compressibility of a conventional pneumatic tire.

## Patentansprüche

1. Ein semipneumatischer Reifen (20), aufweisend:
einen äußeren, nichtpneumatischen, runden Hauptabschnitt (21) ;
einen sekundären, inneren, runden, pneumatischen Abschnitt (22) ;
Kammern (28), welche sich entlang der Breite des Hauptabschnitts (21) erstrecken und welche Querschnittsformen von langgestreckten geometrischen Formen haben, und
Verstärkungsauskleidungen (30), welche innerhalb der Kammern (28) eingebaut sind.

2. Der semipneumatische Reifen (20) nach Anspruch 1, wobei der äußere, nichtpneumatische, runde Hauptabschnitt (21) zwischen einer Krone (25) des semipneumatischen Reifens (20) und dem sekundären, inneren, runden, pneumatischen Abschnitt (22) eingeschlossen ist, wobei eine Höhe des äußeren, nichtpneumatischen, runden Hauptabschnitts (21) gleich einem Prozentsatz von 50-80% der Höhe des semipneumatischen Reifens (20) ist.

3. Der semipneumatische Reifen (20) nach Anspruch 1, wobei der sekundäre, innere, runde, pneumatische Abschnitt (22) als eine pneumatische Kammer, welche naturgemäß in einem Hohlraum (37) des semipneumatischen Reifens (20) auftritt, aus dem Raum geschaffen ist, der innerhalb des Hohlraums (37) übrig bleibt, nachdem der Hauptabschnitt (21) geschaffen ist und seinen geeigneten Raum einnimmt.

4. Der semipneumatische Reifen (20) nach Anspruch 3, wobei der sekundäre, innere, runde, pneumatische Abschnitt (22) zwischen Seitenwänden (26) des semipneumatischen Reifens (20) und der Innenseite des äußeren, nichtpneumatischen, runden Hauptabschnitts (21), welcher eine Karkasse (40) für den sekundären, inneren, runden, pneumatischen Abschnitt (22) ist, eingeschlossen ist, wobei diese Karkasse (40) weiter verstärkt ist.

5. Der semipneumatische Reifen (20) nach Anspruch 1, wobei Flächen von Seitenwänden (29) der Kammern (28) mit einer semiflexiblen, leichten, metallischen Auskleidung (30) mit ungefähr 3 - 5 mm Dicke verstärkt sind.

6. Der semipneumatische Reifen (20) nach Anspruch 1, wobei Kammern (28) des äußeren, nichtpneumatischen, runden Hauptabschnitts (21) sich zwischen den Innenseiten der Seitenwände (26) des semipneumatischen Reifens (20) erstrecken und eine geometrische Querschnittsform von entweder Ovalen (33), oder dazwischen eingeschlossenen, langgestreckten, kreuzenden Wellen (34), oder langgestreckten, gekrümmten Rechtecken (35), oder langgestreckten Hexagonen (36) hat.

7. Der semipneumatische Reifen (20) nach Anspruch 6, wobei der geometrische Querschnitt der Kammern (20) langgestreckt und gekrümmt ist parallel zu der Radfelge (24) und runden Krümmungen des semipneumatischen Reifens (20).

8. Der semipneumatische Reifen (20) nach Anspruch 1, wobei die Kammern (28) verstärkt sind mittels semikomprimierbaren, metallischen Auskleidungen (30), um die Flexibilität, Elastizität und Komprimierbarkeit eines konventionellen pneumatischen Reifens zu simulieren.

## Revendications

1. Pneu semi-pneumatique (20) comprenant :
une partie principale annulaire non pneumatique extérieure (21) ;
une partie secondaire pneumatique annulaire intérieure (22) ;
des chambres (28) qui s'étendent le long de la largeur de la partie principale (21) et qui présentent des formes en coupe transversale de forme géométrique allongée ; et
des revêtements de renfort (30) encastrés à l'intérieur des chambres (28).

2. Pneu semi-pneumatique (20) selon la revendication 1, dans lequel la partie principale annulaire non pneumatique extérieure (21) est comprise entre un sommet (25) du pneu semi-pneumatique (20) et la partie secondaire pneumatique annulaire intérieure (22), la hauteur de la partie principale annulaire non pneumatique extérieure (21) étant égale à un pourcentage compris entre 50 % et 80 % de la hauteur du pneu semi-pneumatique (20).

3. Pneu semi-pneumatique (20) selon la revendication 1, dans lequel la partie secondaire pneumatique annulaire intérieure (22) est créée comme une chambre de pneumatique apparaissant de manière naturelle dans une cavité (37) du pneu semi-pneumatique (20) à partir de l'espace laissé à l'intérieur de la cavité (37) une fois que la partie principale (21) a été créée, et occupe son espace approprié.

4. Pneu semi-pneumatique (20) selon la revendication 3, dans lequel la partie pneumatique secondaire annulaire intérieure (22) est comprise entre les parois latérales (26) du pneu semi-pneumatique (20), et le côté intérieur de la partie principale annulaire non pneumatique secondaire extérieure (21) qui est la carcasse (40) de la partie pneumatique annulaire intérieure (22), dans lequel cette carcasse (40) est en outre renforcée.

5. Pneu semi-pneumatique (20) selon la revendication 1, dans lequel les surfaces des parois latérales (29) des chambres (28) sont renforcées avec un revêtement métallique léger semi-flexible (30), dont l'épaisseur est comprise entre 3 mm et 5 mm environ.

6. Pneu semi-pneumatique (20) selon la revendication 1, dans lequel les chambres (28) de la partie principale annulaire non pneumatique extérieure (21) s'étendent entre les côtés intérieurs des parois latérales (26) du pneu semi-pneumatique (20), et présentent des formes en coupe transversale géométrique ovales (33), ou sont comprises entre des vagues allongées qui se croisent (34), ou des formes rectangulaires incurvées allongées (35), ou des formes hexagonales allongées (36).

7. Pneu semi-pneumatique (20) selon la revendication 6, dans lequel la section en coupe transversale géométrique des chambres (28) est allongée et incurvée parallèlement à la jante de la roue (24) et aux courbures circulaires du pneu semi-pneumatique (20).

8. Pneu semi-pneumatique (20) selon la revendication 1, dans lequel les chambres (28) sont renforcées par des revêtements métalliques semi-compressibles (30), de façon à simuler la souplesse, l'élasticité et la compressibilité d'un pneu pneumatique conventionnel.
